# EUROPÄISCHE PATENTSCHRIFT

(11) **EP 3 344 892 B1**
(45) Veröffentlichungstag und Bekanntmachung des Hinweises auf die Patenterteilung: **16.10.2019**
(21) Anmeldenummer: 16757199.1
(22) Anmeldetag: 17.08.2016
(51) Int. Cl.: F16D 55/228, F16D 65/092

(54) **RÜCKENPLATTE FÜR EINEN SCHEIBENBREMSBELAG, SCHEIBENBREMSBELAG UND FESTSATTELSCHEIBENBREMSE DAZU**
BACKING PLATE FOR A DISK BRAKE LINING, DISK BRAKE LINING, AND FIXED-CALIPER DISK BRAKE THEREFOR
PLAQUE DORSALE POUR UNE GARNITURE DE FREIN À DISQUE, GARNITURE DE FREIN À DISQUE ET FREIN À DISQUE À ÉTRIER FIXE

(30) Priorität: 31.08.2015 DE 102015216592; 25.05.2016 DE 102016209069
(43) Veröffentlichungstag der Anmeldung: 11.07.2018
(73) Patentinhaber: Continental Teves AG & Co. OHG, 60488 Frankfurt am Main (DE)
(72) Erfinder: DREHER, Herbert, 64521 Groß-Gerau (DE); GOLZ, Dietrich, 65520 Bad Camberg (DE); MEHNER, Götz, 61462 Königstein (DE); MARR, Andreas, 65597 Hünfelden (DE); HAAG, Mathias, 64289 Darmstadt (DE); ZIMNOCH, Frederic, 64380 Rossdorf (DE)
(86) Internationale Anmeldenummer: PCT/EP2016/069530
(87) Internationale Veröffentlichungsnummer: WO 2017/036802

(56) Entgegenhaltungen:
- EP-A2- 2 873 886
- DE-A1- 10 312 480
- GB-A- 2 069 078
- JP-A- S58 163 833
- US-A- 4 350 229

## Beschreibung

Symmetrisch in einem Schacht einer Festsattelscheibenbremse abgestützte Rückenplatten für Scheibenbremsbeläge die insbesondere quaderförmige Bremsklötze umfassen sind hinreichend bekannt. Dabei dienen die Rückenplatten jeweils als Träger zur Fixierung von einem Reibwerkstoff auf einer Frontseite, welche einem Reibring zugewiesen ist. Vorrangig leistungsfähige PKW verfügen über Festsattel-Scheibenbremsen, wobei die Reibbeläge für Vorwärts- und Rückwärtsfahrt jeweils auslaufseitig an symmetrisch radial gerichteten Flanken vom Schacht im Bremssattelgehäuse "gedrückt" aufsitzen, und entsprechend im Schacht geführt sind (Bremsenhandbuch, Breuer/Bill; 3. Aufl. 2006, S. 97, Bild 7-11, ISBN-13 978-3-8348-0064-0). Bei sehr kompakter und steifer Bauweise ist die nutzbare Reibfläche jedoch beschränkt und die thermische Balance ebenfalls verbesserungsfähig.

Es sind symmetrische Scheibenbremsbeläge mit in Umfangsrichtung vergrößerter Reibfläche bekannt geworden wobei jenseits vom Zentrum der Rückenplatte nach radial innen versetzt und mit zueinander identischer Höhe (also mit identischer Entfernung von einer Raddrehachse) an jeder Stirnseite der Rückenplatte laterale Haltevorsprünge mit Augen zur Aufnahme von gehäusefesten Bolzen vorgesehen sind. Die Tangentialkräfte werden dabei stets am einlaufseitigen Bolzen abgetragen, und der auslaufseitige Bolzen dient zur Drehsperre gemäß US 8, 517, 152 B2 bzw. WO 2005/064 188 A1. Vorteil dieser Bremsbelag- und Sattelkonstruktion ist deren Steifigkeit also Leistungsfähigkeit und auch thermische Robustheit. Diese Symmetrie der Rückenplatte wird oft bevorzugt, auch aus ästhetischen Gründen. Das Geräuschverhalten dieser Rückenplattenaufhängung wird jedoch verbesserungsfähig gesehen, insbesondere bei Drehrichtungswechsel.

Ganz entsprechend ist der EP 2 873 886 A2 gemäß Fig. 13 eine Rückenplatte mit beidseitig lateral vorstehenden Haltevorsprüngen mit Augen zur Aufnahme von Bolzen zu entnehmen, wobei diese jedoch auf unterschiedlicher Höhe zueinander arrangiert sind. Ein Kern dieser Entwicklung ist das generelle Ziel, einem Scheibenbremsbelag sowohl für Vorwärts- als auch für Rückwärtsfahrt ein radial einwärts drehendes Moment zu erteilen. Zu diesem Zweck sind neben einem Wechsel zwischen gezogener Scheibenbremsbelagaufhängung bei Vorwärtsfahrt und gedrückter Scheibenbremsbelagabstützung bei Rückwärtsfahrt auch noch drei, in unterschiedlicher Kombination an der Rückenplatte angreifende, Stützpunkte zur Lagerung vom Scheibenbremsbelag in der Bremse beschrieben. Das NVH-Verhalten scheint verbesserungsfähig, nachdem Klack-Geräusche bei Drehrichtungswechsel beanstandet werden können.

Infolge Alterung, rauhe Betriebsbedingungen, ggf. in Kombination mit vernachlässigter Wartung, können nämlich grundsätzlich zufriedenstellend arbeitende Festsattelbremsen Komfortprobleme und begleitende Bremsgeräusche (Bremsenquietschen) emittieren. Entsprechende Komfortereignisse werden vom Fahrzeugführer oder Testfahrer mit Begriffen wie "Rubbeln", "Knarzen", "Muhen" wie auch Quietschen oder ähnlich beschrieben. Wechsel in der Abstützungsmethodik in Verbindung mit Drehrichtungswechsel der Bremsscheibe kann Klack-Geräusche emittieren, die geeignet sind, einen aufmerksamen oder vorsichtigen Fahrzeugführer zu irritieren. Um die Komfortbeeinträchtigungen zu vermeiden und weil die vorgeschriebene Wartung nicht immer ausgeführt wird, ist es angesichts der beschriebenen Defizite eine Aufgabe von der vorliegenden Erfindung, die Komfortnachteile der bekannten Scheibenbremsbeläge und Scheibenbremsen nachhaltig, günstig wie auch wartungsfreundlich zu beseitigen, ohne die technische Leistungsfähigkeit und mechanische Robustheit zu gefährden.

Die Problemlösung erhellt aus den kennzeichnenden Merkmalen der unabhängigen Patentansprüche, welche sich jeweils unabhängig voneinander, sowie mit steigender Wertschöpfung über die verschiedenen Stadien einer industriellen sowie arbeitsteiligen Produktion, a) auf die Stahlblechzulieferkomponente Rückenplatte 1 für einen Scheibenbremsbelag 2, b) auf einen komplettierten Scheibenbremsbelag 2, sowie c) auf eine Kraftfahrzeugteilbelagscheibenbremse 30 einschließlich Scheibenbremsbelag 2 erstreckt.

Die Rückenplatte 1 stellt eine zentrale und separat vorgefertigte Komponente eines Scheibenbremsbelags 2 dar. Die Rückenplatte 1 ist aus einem streifenförmigen, ebenen Stahlblechwerkstoff ausgetrennt wie insbesondere fein- oder lasergeschnitten und dient als Träger für eine verfestigte Reibwerkstoffmischung 3 die weitgehend zentral sowie mittelbar oder unmittelbar auf einer Frontseite 4 von der Rückenplatte 1 fixiert ist. Die Rückenplatte 1 verfügt zudem an diametral einander gegenüberliegenden, reibwerkstofffreien, Stirnseiten 6, 7 über Vorsprünge. Dabei wird ein Haltevorsprung 10 von einem Führungsvorsprung 12 unterschieden die jeweils bevorzugt tangential auswärts gerichtet sind. Erfindungsgemäß ist vorgesehen, dass der Haltevorsprung 10 mit einem Durchgangsloch 11 ausgebildet ist, wohingegen der Führungsvorsprung 12 als Maulöffnung 13 mit Aufnahmetasche 14 und Freistich ausgebildet ist. Dementsprechend ist der Haltevorsprung 10 konstruktiv prädestiniert, um ein einseitig fix vorgegebenes Festlager zur Aufhängung vom Scheibenbremsbelag 2 im Gehäuse 31 der Bremse zu definieren, wohingegen die Maulöffnung 13 mit Aufnahmetasche 14 vom Führungsvorsprung 12 konstruktiv dazu prädestiniert ist, um ein Los- bzw. Spurlager als Drehsperre auszubilden. Demzufolge wird anhand einer erfindungsgemäßen Rückenplatte 1 in besonders vereinfachter, ökonomischer wie auch in äußerst vorteilhaft-einschwenkmontierbarer Art und Weise eine statisch bestimmte und gleichzeitig komfortorientierte Lagerung zwischen Scheibenbremsbelag 2 und Kraftfahrzeugteilbelagscheibenbremse 30 aufgezeigt.

In zusätzlich vorteilhafter Ausgestaltung von der Rückenplatte 1 ist vorgesehen, dass der Haltevorsprung 10 mit Durchgangsloch 11 gegenüber dem Führungsvorsprung 12 mit Maulöffnung 13 und Aufnahmetasche 14 diagonal querversetzt zueinander derart angeordnet ist, dass ein radial maximierter Abstand zwischen den Abstützpunkten vorliegt. Demzufolge wird die zielgerichtete Einwirkung von einem Kräftepaar auf die Rückenplatte 1 ermöglicht, welche im Resultat bei Vorwärtsfahrt ein Eindrehmoment und bei Rückwärtsfahrt ein Ausdrehmoment auf die Rückenplatte 1 ausübt, und ohne die vorgegebene Platzierung von Fest- und Loslagerung zu vertauschen. Versuchstechnisch wurde verifiziert, dass die erfindungsgemäße Abstützung das NVH-Verhalten positiv beeinflusst.

Fehlmontage oder Verwechslung ist durch konstruktiv integrierte Codierung nach dem poka yoke Prinzip ausgeschlossen. Beispielsweise verfügt in einer Ausgestaltung das Durchgangsloch 11 und die Maulöffnung 13 über unterschiedlich oder identisch dimensionierte Durchmesser, und wobei zugeordnete Haltebolzen 21 und Führungsbolzen 22 ihrerseits über angepasste und identisch oder unterschiedlich dimensionierte Durchmesser verfügen.

Die Loslagerfunktion ist verbessert darstellbar, wenn der Führungsvorsprung 12 gabelförmig gestaltete Zinken 15, 16 aufweist, und wenn die Aufnahmetasche 14 schräg (vgl. Detailzeichnung) oder parallel zur Tangentialrichtung zwei zueinander parallele Führungsflächen 17, 18 definiert, welche an die Maulöffnung 13 angrenzen, und dass die Führungsflächen 17, 18 gegenüber der Maulöffnung 13 durch einen Boden 19 verbunden sind, und wobei der Boden 19 durch einen Freistich 20 vertieft ausgebildet ist.

Die Erfindung bezieht sich des Weiteren auf einen neuartigen Scheibenbremsbelag 2 umfassend eine Rückenplatte 1 und mit den kennzeichnenden Merkmalen vom nebengeordneten Patentanspruch. Demzufolge ist die Rückenplatte 1 asymmetrisch und nur an einer Stirnseite 6 mit Haltevorsprung 10 und Durchgangsloch 11 zur Aufnahme von einem Haltebolzen 21 versehen, so dass das Durchgangsloch 11 mit Abstand a radial unterhalb von Zentrum bzw. Wirkungslinie an der Rückenplatte 1 angeordnet ist, und der zugeordnete Haltebolzen 21 entsprechend unterhalb angreifen kann, und wobei die Rückenplatte 1 an einer gegenüberliegenden Stirnseite 7, bevorzugt radial oberhalb von Wirkungslinie bzw. Zentrum über eine Maulöffnung 13 mit Aufnahmetasche 14 verfügt, und ein Führungsbolzen 22 durch die Maulöffnung 13 in die Aufnahmetasche 14 formschlüssig derart einzugreifen vermag, dass Führungsbolzen 22 und Haltebolzen 21 in Tangentialrichtung T mit definiertem Abstand b zueinander arrangiert sind. Tangentialkräfte werden demzufolge im Wesentlichen vollständig zwischen Haltevorsprung 10 und Haltebolzen 21 übertragen, wohingegen Führungsbolzen 22 und Aufnahmetasche 14 gewissermaßen als Drehsperre bzw. Spurlager wirksam sind. Zusammenfassend erfolgt eine Funktionstrennung derart dass die Aufnahmetasche 14 mit den Führungsflächen 17, 18 im Wesentlichen zur Übertragung von radial gerichteten Scheibenbremsbelagführungskräften vorgesehen ist, wohingegen der Haltevorsprung 10 mit dem Durchgangsloch 11 im Wesentlichen zur Übertragung von tangential gerichteten Bremskräften vorgesehen ist.

Die Loslagerfunktion wird verbessert, indem die Aufnahmetasche 14 parallel oder schräg zur Tangentialrichtung T zwei Führungsflächen 17, 18 definiert, welche an Maulöffnung 13 und vertieften Boden 19 mit Freistich 20 angrenzen, und wobei jeweils eine der Führungsflächen 17, 18 im Bremsbetrieb geeignet ist, zur Scheibenbremsbelagauflage in der Radialrichtung R am zugeordneten Führungsbolzen 22 zu dienen. Indem der Boden 19 durch den Freistich 20 mit Spiel zum Führungsbolzen 22 dargestellt ist, wird eine besonders korrosionsfeste also selbstreinigende und wartungsarme Konstruktion erhalten.

Grundsätzlich ist es aus ergonomischen Gründen empfehlenswert, wenn die gegenseitigen Übergänge zumindest in der Kontur zwischen den beiden Führungsflächen 17, 18 und dem Boden 19 kavitätisch abgerundet sind, also zwei oder mehr gekrümmte Übergangsabschnitte aufweisen.

Eine einstückige gießtechnische Herstellung vom Bremssattelgehäuse 31 wird erleichtert, wenn die Haltebolzen 21 und Führungsbolzen 22 daran integral-einstückig, zylindrisch ausgeprägt sind. Es ist aber grundsätzlich auch möglich, zylindrische Bolzen gesondert zu fertigen und lösbar oder unlösbar am Gehäuse 31 zu fixieren.

Ein Durchgangsloch 11 verfügt über gegenüberliegende Mantelflächen welche zueinander in Radial- bzw. Axialrichtung unterschiedliche Abstände aufweisen. Insbesondere ist ein vorwiegend radial gerichtetes Langloch möglich, dessen Durchmesser in Radialrichtung R mit Hilfe von Freisparungen größer ausgebildet ist, als dessen Durchmesser in der Tangentialrichtung T.

Ein Nebenanspruch der vorliegenden Erfindung bezieht sich auf eine neuartige Kraftfahrzeugteilbelagscheibenbremse 30 wobei jeder Gehäuseschenkel 32,33 einen Haltebolzen 21 als Teil der Festlagerung zur Aufnahme von Umfangskraft sowie einen Führungsbolzen 22 als Teil der Loslagerung zwecks Drehsperre vom aufgenommenen Scheibenbremsbelag 2 aufweist, und wobei jeder Haltebolzen 21 an einem Durchgangsloch 11 und jeder Führungsbolzen 22 an einer Aufnahmetasche 14 von der Rückenplatte 1 des Scheibenbremsbelags 2 derart angreift, dass eine einlaufseitige pull-Abstützung vom Scheibenbremsbelag 2 am Haltebolzen 21 infolge Bremsung bei Vorwärtsfahrt und eine auslaufseitige push-Abstützung vom Scheibenbremsbelag am Haltebolzen 21infolge Bremsung bei Rückwärtsfahrt definiert ist. Demzufolge resultiert bei Vorwärtsfahrt ein einschwenkendes Eindrehmoment in Bezug auf die Raddrehachse mit dem Haltebolzen 21 als Momentanpol, und wobei eine obere Führungsfläche 17 von der Aufnahmetasche 14 auf dem Führungsbolzen 22 zwecks Loslagerung (Drehsperre) aufsitzt. Umgekehrt erfährt der Scheibenbremsbelag 2 bei Rückwärtsfahrt ein ausschwenkendes Ausdrehmoment und wobei eine untere Führungsfläche 18 von der Aufnahmetasche 14 zwecks Drehsperre auf dem Führungsbolzen 22 aufsitzt.

In weiterhin vorteilhaft codierter Ausgestaltung einer erfindungsgemäßen Festsattelscheibenbremse 30 ist vorgesehen, dass jeder Haltebolzen 21 in Bezug auf ein Zentrum Z vom Scheibenbremsbelag radial innen platziert vorgesehen ist, und dass jeder Führungsbolzen 22 in Bezug auf das Zentrum Z vom Scheibenbremsbelag bevorzugt radial aussen platziert vorgesehen ist. In zusätzlicher Ausgestaltung ist es möglich, dass das Gehäuse 31 über eine asymmetrisch gestaltete Scheibenbremsbelagaufnahme verfügt, deren Kontur an die asymmetrisch ausgetrennte Rückenplatte 1 vom Scheibenbremsbelag 2 angepasst ist, so dass eine gegenseitig formschlüssige und lagerichtige Formcodierung vorliegt, die automatisch eine einzige lagerichtige Montagepaarung zwischen Scheibenbremsbelag 2 und Gehäuse 31 sicherstellt (poka yoke). Die Abwandlung wird nach Bedarf rationell ergänzt, indem an jedem Gehäuseschenkel 32, 33 zwei identisch stark dimensionierte Bolzen vorgesehen sein können, und dass am zugeordneten Scheibenbremsbelag 2 Durchgangslöcher und Aufnahmetasche mit jeweils bevorzugt identischer Weite vorgesehen sind. Vereinheitlichte Bolzendurchmesser reduzieren andererseits einen logistischen Aufwand.

Alternativ ist es möglich, dass jeder Gehäuseschenkel 32, 33 einen Haltebolzen 21 und einen Führungsbolzen 22 aufweist, die zwei voneinander unterschiedlich stark dimensionierte Durchmesser aufweisen, und dass am zugeordneten Scheibenbremsbelag 1 ein Durchgangsloch 11 und eine Aufnahmetasche 14 mit entsprechend angepasstem Durchmesser vorgesehen ist. Dies kann Fehlpaarung vermeiden helfen bzw. Gewichtseinsparung ermöglichen.

Weitere Einzelheiten der Erfindung gehen aus der Beschreibung anhand der Zeichnung hervor. Die Zeichnung zeigt teilweise vereinfacht, sinnbildlich, in verschiedensten Ansichten und/oder vergrößert beziehungsweise verkleinert:

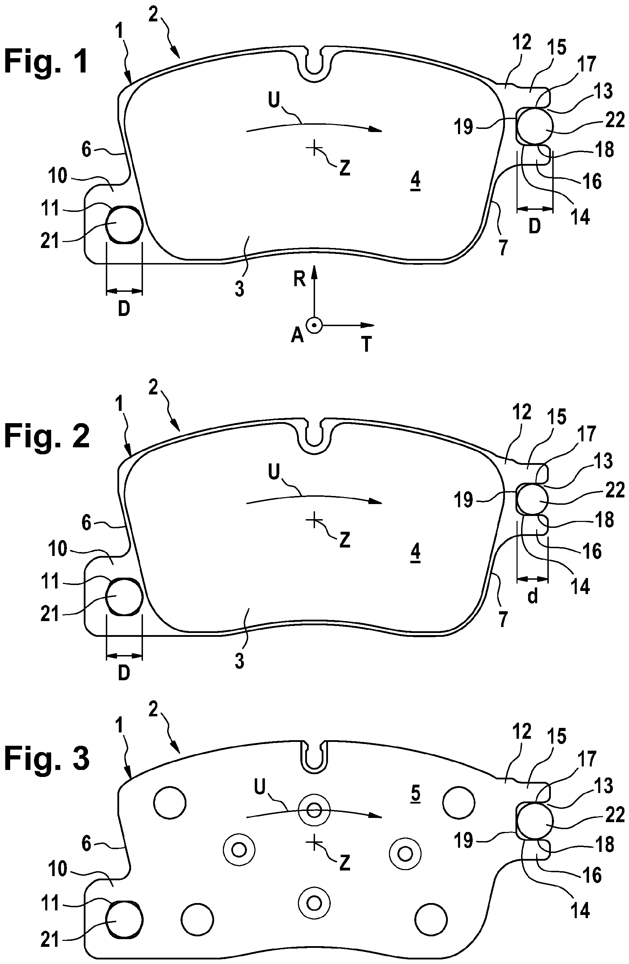

Fig. 1: asymmetrisch gestützter Scheibenbremsbelag mit identisch dimensioniertem Trag- und Führungsbolzendurchmesser in Frontansicht sowie verkleinert,
Fig. 2: asymmetrisch gestützter Scheibenbremsbelag mit unterschiedlich dimensioniertem Trag- und Führungsbolzendurchmesser in Frontansicht sowie verkleinert,
Fig. 3: Scheibenbremsbelag wie in Fig. 1 in Rückansicht,
Fig. 4: vergrößerte Detailansicht vom Auge, Durchgangsloch und Tragbolzen in Fig. 1 in Frontansicht,
Fig. 5: Rückansicht einer symmetrischen Rückenplatte,
Fig. 6 vergrößere Rückansicht vom Auge,

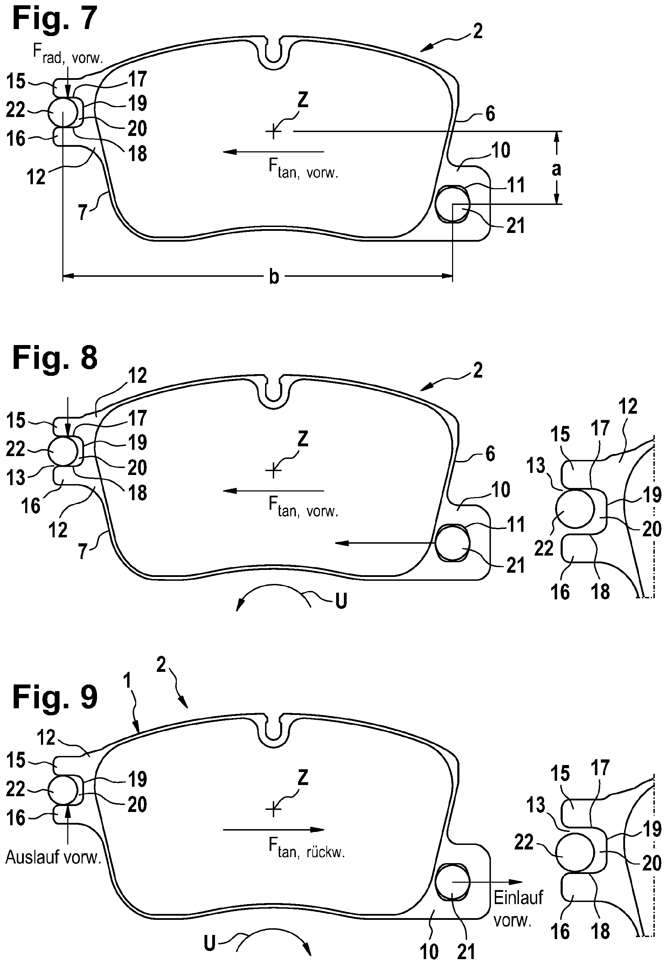

Fig. 7 Prinzipskizze zur grundsätzlichen Verdeutlichung einer erfindungsgemäßen Reibbelagabstützung mit Tragbolzen und Führungsbolzen,
Fig. 8: Prinzipskizze zur grundsätzlichen Verdeutlichung einer erfindungsgemäßen Reibbelagabstützung mit Tragbolzen und Führungsbolzen bei Vorwärtsfahrt (primäre Drehrichtung),
Fig. 9: Prinzipskizze zur grundsätzlichen Verdeutlichung einer erfindungsgemäßen Reibbelagabstützung mit Tragbolzen und Führungsbolzen bei Rückwärtsfahrt (sekundäre Drehrichtung),
Fig. 10: Reibbelag mit Befederung (Low Drag) in Frontansicht und verkleinert,
Fig. 11: vergrößerte Einzelheit der Befederung im Schnitt entlang der Linie XI-XI in Fig. 10,
Fig. 12 die kooperierenden Bauteile einer Befederung nach fig. 10 inetwa maßstäblich sowie als Explosionszeichnung
Fig. 13: Festsattelbremse in Vierkolbenausführung mit vier Brückenabschnitten und drei Brückenfenstern einschließlich Befederung perspektivisch sowie verkleinert,
Fig. 14: Festsattelbremse wie in Fig. 13 im Längsschnitt, und
Fig. 15: eine andere Ausführungsform einer Festsattelbremse in Vierkolbenausführung einschließlich Befederung und einer zentral platzierten Brückenöffnung,
Fig. 16: stark schematisch sowie verkleinert unterschiedlich abgeschrägt ausgeformte Varianten von antiparallel ausgestalteten Maulöffnungen 13a-i, teilweise mit Brücke 23 dargestellt.

Erfindungsgemäß wird vorgeschlagen, die Tangentialkraft (Bremskraft) von Rückenplatte 1/Scheibenbremsbelag 2 ohne Ortswechsel immer über ein zentral definiert vorgegebenes Festlager umfassend Haltevorsprung 10 mit Durchgangsloch 11 ausgehend von der Rückenplatte 1 auf einen gehäusefesten Haltebolzen 21 zu übertragen. Dies erfolgt sowohl für Vorwärtsals auch für Rückwärtsfahrt. Die Rückenplatte 1 ist asymmetrisch geformt und trägt auf einer Front/Vorderseite 4 eine kompaktierte Reibwerkstoffmischung 3.

Stirnseitig 6 sowie deutlich unterhalb von Zentrum/Kolbenmitte Z ist das Festlager allokiert. Für die Vorzugsdrehrichtung (Vorwärtsfahrt) vom Reibring ist festgelegt, dass das Festlager einlaufseitig platziert ist und umgekehrt für die sekundäre Drehrichtung (Rückwärtsfahrt). In der Hauptdrehrichtung (Vorwärtsfahrt) ist die Rückenplatte 1 also durch das gebildete Festlager vorwiegend unter Zugbeanspruchung abgestützt. In rückwärtiger Drehrichtung (Rückwärtsfahrt) erfolgt die Abstützung der Rückenplatte 1 über dasselbe Festlager jedoch vorwiegend unter Druckbeanspruchung der Rückenplatte 1.

Zumindest zur Vereinfachung von Gehäuseschnittstellen kann der gehäusefeste Führungsbolzen 22 bevorzugt über identische Querschnitte, genauso wie der Haltebolzen 21 verfügen. Demgegenüber ist der Querschnitt im Bereich der Reibbelagführung und Abstützung im Vergleich zum Haltebolzen 21 reduzierbar. Denn der Führungsbolzen 22 dient nur als Spurlager bzw. als Drehsperre für den Scheibenbremsbelag 2 so dass keine besonders massive Gestaltung erforderlich ist, und die Beanspruchung vom Führungsbolzen 22 ist deutlich reduziert. Also kann dessen Effizienz gesteigert sein, wenn dessen Querschnitt d kleiner ausgeführt ist als der Querschnitt D vom Haltebolzen 21 und Werkstoffbedarf ist reduziert.

Gleichzeitig ist es möglich, Gewicht zu sparen, und zumindest gleich dimensionierte Gehäuseschnittstellen und Bohrwerkzeuge zur Fertigung identischer Gehäuseschnittstellen im Gehäuseschenkel 32,33 vorzusehen (zwecks Vereinheitlichung der Fertigungsperipherie). Der Führungsbolzen 22 kann zur weiteren logistischen Vereinfachung wie auch zur Umsetzung einer Gleichteilstrategie prinzipiell durchaus mit durchgehend identischer Formgebung und Querschnitt wie der Tragbolzen 21 ausgeführt werden. Es ist für alle Ausgestaltungen prinzipiell möglich, einen oder beide Bolzen zumindest teilweise hohl, zumindest aber als Kaltpressbauteil auszuführen, um den Werkstoff möglichst effizient sowie vorzugsweise kaltverfestigt einzusetzen. Obwohl vorstehend stets von separat am Gehäuse 31 montierbaren Bolzen gesprochen wurde, ist es in weiterer Vervollkommnung einer entsprechenden Festsattelscheibenbremse natürlich genauso möglich, die Bolzen an jedem Gehäuseschenkel 32,33 einstückig mit dem Gehäuse 31, also gießtechnisch, auszubilden, ohne den Kern der vorliegenden Erfindung zu verlassen.

Ein gabelzinkenförmig offen gestalteter Führungsvorsprung 12 mit Maulöffnung 13 und Aufnahmetasche 14 zur Aufnahme vom Führungsbolzen 22 ist auf der dem Festlager gegenüber liegenden Stirnseite 7 sowie vorzugsweise radial oberhalb von Zentrum/Kolbenmitte Z auslaufseitig an der Rückenplatte 1 platziert. Die offene Gestaltung ermöglicht eine einfache Einschwenkmontage zwischen Gehäuse 31 mit Führungsbolzen 22 und Scheibenbremsbelag 2. Soweit jedoch zu befürchten ist, dass die Gabelzinken 15, 16 zueinander stimmgabelartig schwingen, kann als ergänzende Komfort-/Geräuschbekämpfungsmaßnahme prinzipiell vorgesehen sein, dass die Gabelzinken 15, 16 am offenen Ende der Maulöffnung durch eine Brücke 23 gegenseitig fest miteinander verbunden werden, ohne die Erfindung zu verlassen. Zusätzliche maschinenakustische Dämpfungsmaßnahmen und/oder Masseverstimmung sind ebenfalls möglich.

Der im Querschnitt kreisringförmige Haltebolzen 21 durchgreift das Durchgangsloch 11 vom Haltevorsprung 10 vollständig. Die Mantelfläche vom Durchgangsloch 11 ist zwecks Reduktion von gegenseitigen Kontaktnormalspannungen in der Kontur derart gekrümmt an die weitgehend kreisringförmige Oberflächenkrümmung vom Haltebolzen 21 angeschmiegt ausgeformt, dass zwischen Haltebolzen 21 und Haltevorsprung einerseits ein möglichst reibungsarmer Kontakt vorliegt, und wobei andererseits eine möglichst verschleiß- und bewitterungsresistente, wartungsfreie Lagerung vom Scheibenbremsbelag 2/Rückenplatte 1 vorliegt. Unter der klimatischen Komplexbeanspruchung einschließlich heftigster Salzbewitterung eines Radbremssystems hat es sich als besonders vorteilhaft erwiesen, wenn sich die gegenseitig miteinander kooperierenden metallischen Werkstoffe (Bolzen, Rückenplatte) elektrochemisch weitgehend passiv zueinander verhalten. Dazu können diese über eine gegenseitige elektrische Passivierung bzw. Isolation verfügen wie insbesondere von Natur aus über eine möglichst geringe Tendenz zur elektrischen Lokalelementbildung/Kontaktkorrosion verfügen. Dabei ist es zielführend, dass die Auswahl der Paarung der kooperierenden Werkstoffe so ist, dass als Resultat der Paarung eine möglichst geringe Potentialdifferenz also geringe Lokalelementtendenz in der elektrochemischen Spannungsreihe der Metalle realisiert wird. Dabei ist es insbesondere von technischem Vorteil wenn wenigstens eines der beteiligten Kontaktbauteile wenigstens oberflächlich elektrisch isoliert ausgerüstet ist oder eben der jeweilige Grundwerkstoff ohnehin ein elektrischer Nichtleiter ist.

Beispielsweise ist es möglich, dass wenigstens eines der beteiligten Kontaktbauteile (Bolzen, Rückenplatte 1) aus einem nichtrostenden Werkstoff ausgeführt ist. Es empfiehlt sich in diesem Zusammenhang eine elektrisch quasipassivierte Paarung unter Verwendung von einem konventionell lackierten Stahlstanzblechwerkstoff als Rückenplatte 1 . Generell ist es natürlich möglich dies in der Kombination mit einem Edelstahlwerkstoff, oder mit einem Aluminiumwerkstoff, oder mit einem Titanwerkstoff oder mit korrosionsresistenten Gusswerkstoff (quasipassivierte Gusshautoberfläche) in der Verwendung für Bolzen. Natürlich sind auch rationalisierte Mischformen davon denkbar, indem beispielsweise einer der Bolzen einstückig mit dem Gussgehäuse ausgeprägt ist, und der andere der Bolzen gesondert vorgesehen sowie aus einem anderen Werkstoff ausgebildet ist.

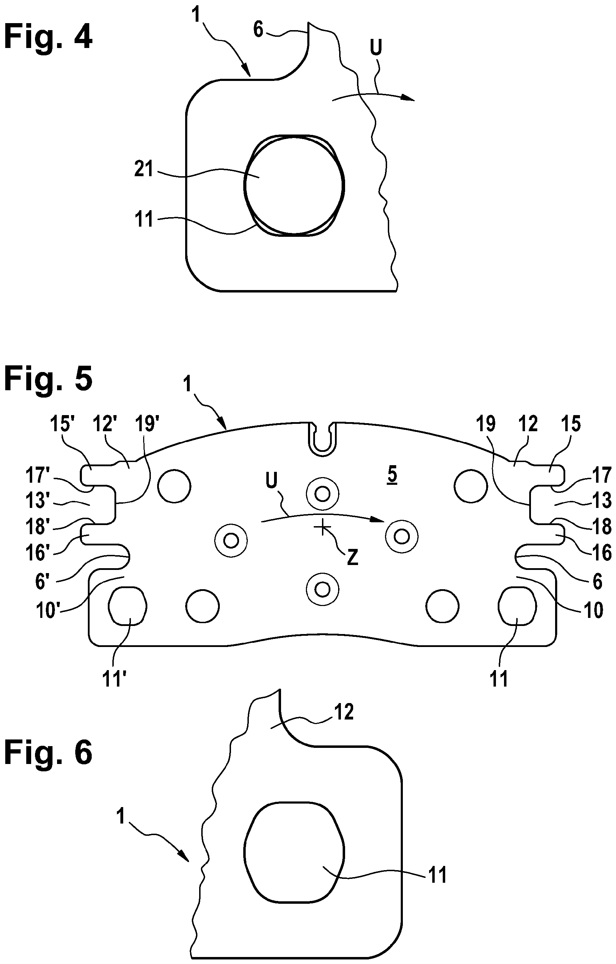

Zur besonderen Vereinfachung der Montage wie auch zur Reduktion der Teilevielfalt kann ein Bremsbelagträger oder ein Festsattel-Bremsgehäuse 31 bei sonst entsprechender Lagerung vom Scheibenbremsbelag 2 prinzipiell auch so ausgeführt werden, daß ein einheitlich symmetrisch gestalteter Bremsbelag 2 sowohl innenbords als auch außenbords einsetzbar ist (Fig. 5).

Im Vergleich zu einer konventionell wechselnden Reibbelagabstützung mit drehrichtungsabhängig wechselnder Tangentialkraftabstützung im Gehäuse 31 erfolgt die Tangentialkraftabstützung erfindungsgemäß zentral anhand vom Haltebolzen 21 mit der Folge einer rationalisierten Toleranzkette und wobei im Rahmen der Tangentialkraftabstützung lediglich die gegenseitige Tolerierung zwischen Haltebolzen 21 und Durchgangsloch 11 maßgeblich ist. Also wird es erfindungsgemäß überraschend einfach ermöglicht, Reversierklacken durch lokal reduziertes Spiel im Bereich zwischen Haltebolzen 21 und Durchgangsloch 11 weitestgehend kostenneutral zu bekämpfen. Der Führungsbolzen 22 ist gering beansprucht und übernimmt lediglich die radiale Abtützung bzw. Verdrehsicherung des Scheibenbremsbelages 2 im Gehäuse 31. Der Führungsbolzen 22 kann daher bei Bedarf entsprechend querschnittreduziert ausgeführt sein und es empfiehlt sich, den Haltebolzen am Gehäuse 31 integral anzugießen, wohingegen der Führungsbolzen 22 bevorzugt gesondert ausgebildet ist, oder umgekehrt.

Die jeweils einseitig an der Rückenplatte 1 also asymmetrisch versetzt vorgesehenen Haltevorsprünge 10 und Führungsvorsprünge 12 eliminieren durch konsequente Aufgabentrennung Redundanzen. Die Ausnutzung der Rückenplatte 1 als Reibbelagträger, also die nutzbare Reiboberfläche ist verbessert. Dies wird begleitet von einer verbesserten Skalierbarkeit zwischen der Größe der Rückenplatte 1, der nutzbaren Reiboberfläche und der möglichen Kolbenauflage/Anzahl der Kolben 34,35. Durch stirnseitig diametral gegenüberliegende sowie zusätzlich diagonal versetzte Reibbelagabstützung erfolgt eine Verbesserung des NVH-Verhaltens. Ein Blechstreifenbild von der Rückenplattenfertigung ist zusätzlich verdichtet. Desweiteren ist das Masse/Steifigkeitsverhältnis der gesamten Bremse 30 verbessert. Die Kontaktkräfte in der Belagabstützung können aufgrund des Formschlusses deutlich größer gewählt werden. Mit zunehmender Umfangslast ansteigende Führungsnormalkräfte mit konstanter Wirkrichtung in der Belagabstützung erzeugen die besten Voraussetzungen für ein gutes Bremsgeräuschverhalten. Deutliche Reduzierung des Führungsspiels an dem bremskraftübertragenden Bolzen und damit Minimierung der Bremsgeräusche bei Fahrtrichtungswechsel (Reversierklacken, Klappern). Vermeidung von korrosionsbedingter Schwergängigkeit der Bremsbelagabstützung und -führung.

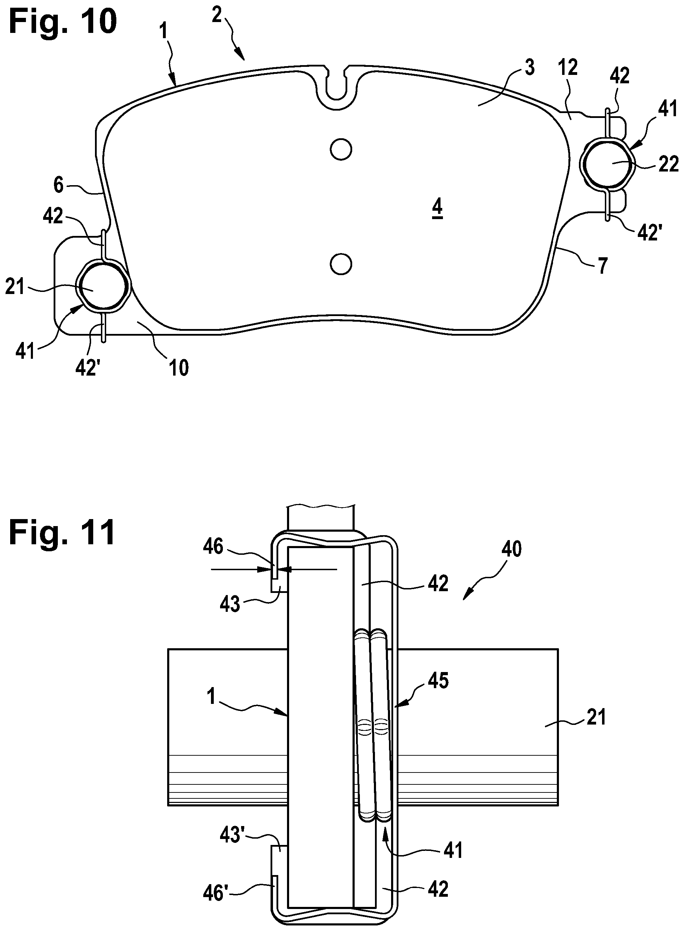

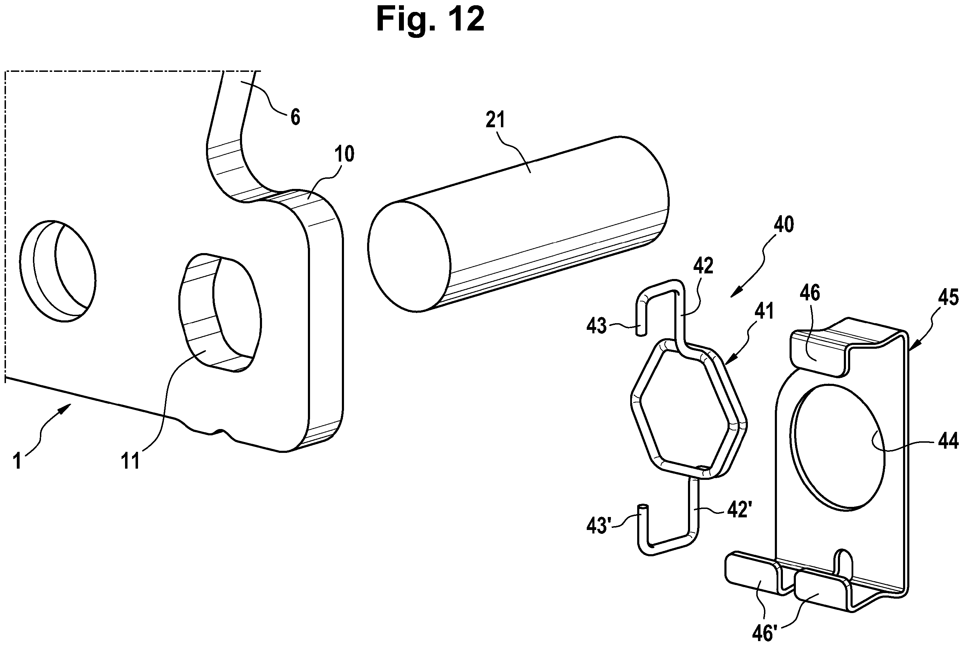

Jedem Scheibenbremsbelag 2 kann gemäß Fig. 10-12 wenigstens ein Rückstellmittel 40 zugewiesen sein, das zur bedarfsgerechten Reibbelagverschleißnachstellung dient und gleichzeitig Restbremsmomente vermeiden hilft. Vorzugsweise sind an jedem Scheibenbremsbelag 2 im Bereich von jedem Lager - also ein- und auslaufseitig - zwei Rückstellmittel 40, 40' vorgesehen. Dabei umfasst die Ausbildung von jedem Rückstellmittel 40, 40' jeweils eine aus Draht gebogene Schlingfeder 41, die in Ihrem Zentrum mit Hilfe der Schlinge einen Bolzenumfang (Tragbolzen bzw. Führungsbolzen) elastisch umgreift. Von der Schlinge gehen diametral gerichtete Halteschenkel 42 aus, die mit Krallen 43 am jeweiligen Vorsprung (Haltevorsprung 10, Führungsvorsprung 12) der Rückenplatte 1 angreifen, um die Schlingfeder 41 an der Rückenplatte 1 zu fixieren. Zusätzlich ist jede Schlingfeder 41 von jeweils einem Blechelement 45 übergriffen, das über ein zentrales Durchgangsloch 44 für den jeweiligen Bolzen verfügt, und seinerseits mit Halteklammern 46 am jeweiligen Vorsprung der Rückenplatte 1 lösbar fixiert ist. Bei Überschreiten eines vordefinierten Axialspiels zwischen Schlingfeder 41 und Blechelement 45 streift das Blechelement 45 die Schlingfeder 41 axial über den Bolzenumfang mit sich und gleicht dadurch Reibbelagverschleiß automatisch aus. Zusätzlich oder ergänzend ist jede Rückenplatte 1 mit wenigstens einer elastischen Klammer 50 lösbar im napfförmigen Hohlraum/Innenraum vom jeweiligen Kolben 34,35 fixierbar. Dadurch erhält der Scheibenbremsbelag 2 ggf. zusätzlich einen Rückstelleffekt durch den oder die Bremskolben 34,35 aufgeprägt.

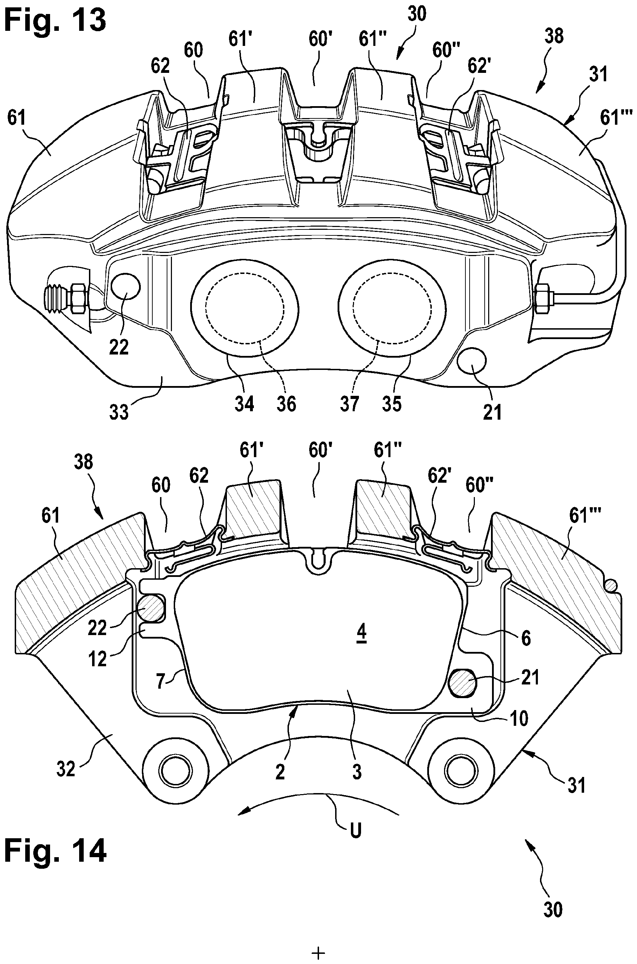

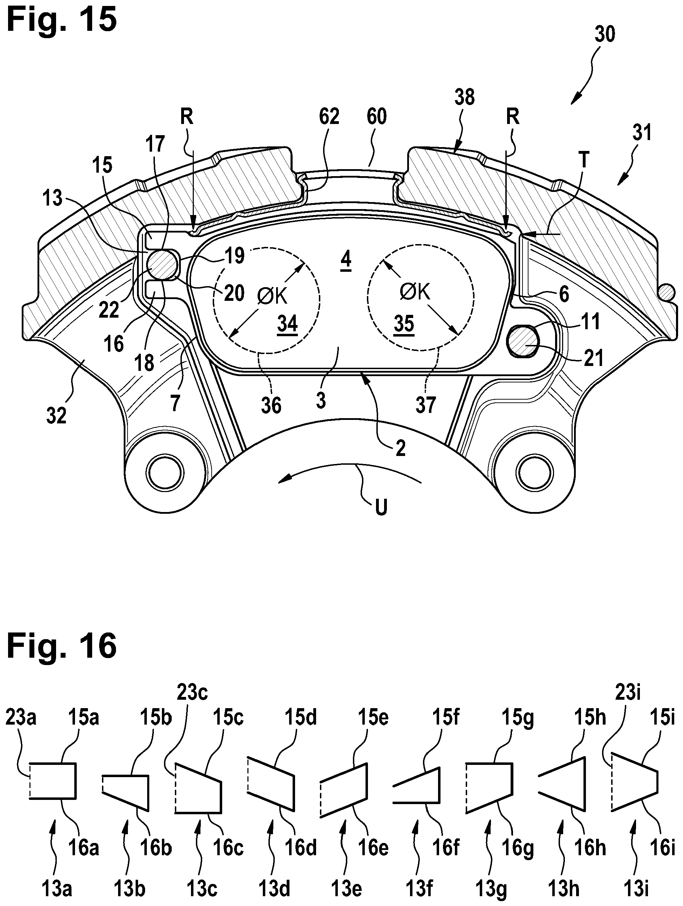

Die Ausgestaltung vom Festsattelgehäuse 31 ist vorzugsweise brückenseitig offen gestaltet, um eine verbesserte Durchlüftung und Kühlung der Radbremsanlage zu ermöglichen. Dabei ist es grundsätzlich möglich, ein oder mehrere Brückenfenster 60, 60', 60" (Fig. 15; 13 +14) im Wechsel mit entsprechenden Brückenabschnitten 61, 61', 61", 61''' vorzusehen. Wie aus den Figuren 13 -15 erhellt, können die Brückenfenster 60, 60" zusätzliche Federmittel (Topspring) 62, 62' aufnehmen, die jeweils radial elastisch vorgespannt zwischen der Rückenplatte 1 vom Scheibenbremsbelag 2 und der Gehäusebrücke 38 eingespannt sind, und jeweils eine radial einwärts oder radial auswärts gerichtete elastische Vorspannung zwischen Scheibenbremsbelag 2 und Gehäuse 31 ermöglichen.

Neben den ausdrücklich vorstehend aufgeführten Vorteilen ermöglicht die Erfindung zudem die Vermeidung folgender Nachteile:
- Geschlossen-formschlüssig axialverschiebbare Reibelagführung durch Haltebolzen 21 und Durchgangsloch 11 - ohne Reibbelagaushebegefahr
- Geräuscharme Reibbelagaufhängung ohne zwingend notwendige Dämpfungsbleche
- Verschleißarme Reibbelagführung ohne Notwendigkeit von Gleitblechen
- Vermeidung von Bremsgeräuschen im niederfrequenten Bereich ohne technisch aufwändige Maßnahmen
- Skalierbarkeit für einen größeren Bereich der Bremsscheiben- bzw. Felgendurchmesser
- Bessere Skalierbarkeit bezogen auf die Größe der Belagfläche und Anzahl der Bremskolben 34,35 (2, 4 oder 6 (n) Kolben)
- Reduzierung eines tang. Kolbenoffsets durch gezogene Beläge (vs. gedrückten Belägen)
- Vermeidung von aufwändiger Bearbeitung der Belagabstützungs- und führungsflächen
- Vermeidung von großflächigen Belagträgern und des damit verbundenen ungünstigen Masse/Steifigkeitsverhältnisses der Kraftfahrzeugscheibenbremse 30
- Minimierung der Geräusche bei Fahrtrichtungswechsel unter allen Temperaturbedingungen
- Niedrige Belag Verschiebekräfte für niedrige Restmomente
- Optimierung der Belagabstützung bei korrosionsfördernden Umweltbedingungen und damit Vermeidung von schwergängiger Belagabstützung und -führung nach längerer Einwirkzeit von Streusalz, Schmutz, Bremsbelagabrieb etc.

### Bezugszeichenliste

- 1: Rückenplatte
- 2: Scheibenbremsbelag
- 3: Reibwerkstoff
- 4: Frontseite
- 5: Rückseite
- 6: Stirnseite
- 7: Stirnseite
- 8: --
- 9: --
- 10: Haltevorsprung
- 11: Durchgangsloch
- 12: Führungsvorsprung
- 13: Maulöffnung
- 14: Aufnahmetasche
- 15: Gabelzinken
- 16: Gabelzinken
- 17: Führungsfläche
- 18: Führungsfläche
- 19: Boden
- 20: Freistich
- 21: Haltebolzen
- 22: Führungsbolzen
- 23: Brücke

- 30: Kraftfahrzeugteilbelagscheibenbremse
- 31: Gehäuse
- 32: Gehäuseschenkel (innenbords)
- 33: Gehäuseschenkel (außenbords)
- 34: Kolben
- 35: Kolben
- 36: Bohrung
- 37: Bohrung
- 38: Gehäusebrücke
- 40: Rückstellmittel
- 41: Schlingfeder
- 42: Halteschenkel
- 43: Kralle
- 44: Durchgangsloch
- 45: Blechelement
- 46: Halteklammer

- 50: Klammer

- 60, 60', 60": Brückenfenster
- 61, 61', 61", 61''': Brückenabschnitt
- 62, 62': Federmittel

- A: Axialrichtung
- b: Abstand
- R: Radialrichtung
- T: Tangentialrichtung
- Z: Zentrum

## Patentansprüche

1. Rückenplatte (1), für einen Scheibenbremsbelag (2) einer Kraftfahrzeugteilbelagscheibenbremse (30), aus Stahlblechwerkstoff als Träger für Reibwerkstoff (3) der zentral sowie mittelbar oder unmittelbar auf einer Frontseite (4) von der Rückenplatte (1) unlösbar fixierbar ist, und wobei die Rückenplatte (1) an diametral einander gegenüberliegenden Stirnseiten (6, 7) über tangential auswärts gerichtete Vorsprünge verfügt, wobei eine der Stirnseiten (6) radial innen über einen Haltevorsprung (10) mit einem Durchgangsloch (11) verfügt, **dadurch gekennzeichnet dass** die gegenüberliegende Stirnseite (7) der Rückenplatte (1) radial aussen mit einem offenen Führungsvorsprung (12) versehen ist, der über eine Maulöffnung (13) mit Aufnahmetasche (14) verfügt.

2. Rückenplatte (1) nach Anspruch 1, **dadurch gekennzeichnet, dass** der Führungsvorsprung (12) über wenigstens zwei weitgehend parallel zueinander arrangierte Gabelzinken (16) verfügt.

3. Rückenplatte (1) nach Anspruch 2, **dadurch gekennzeichnet, dass** die Gabelzinken (16) durch eine Brücke (23) gegenseitig miteinander verbunden sind.

4. Rückenplatte (1) nach Anspruch 1, 2 oder 3, **dadurch gekennzeichnet, dass** das Durchgangsloch (11) und die Maulöffnung (13) mit Aufnahmetasche (14) zueinander diagonal gegenüberliegend versetzt an den Stirnseiten (6, 7) der Rückenplatte (1) angeordnet sind.

5. Rückenplatte (1) nach Anspruch 1, 2, 3 oder 4, **dadurch gekennzeichnet, dass** Durchgangsloch (11) und Maulöffnung (13) über unterschiedliche oder identische Aufnahmequerschnitte verfügen.

6. Rückenplatte (1) nach einem oder mehreren der vorhergehenden Ansprüche 1-5, **dadurch gekennzeichnet, dass** die Aufnahmetasche (14) parallel zur Tangentialrichtung T zwei, a) zueinander parallel oder b) trichterförmig schräg, arrangierte Führungsflächen (17,18) definiert, welche an die Maulöffnung (13) angrenzen, und dass die Führungsflächen (17, 18), gegenüber der Maulöffnung (13), durch einen Boden (19) verbunden sind, und wobei der Boden (19) durch einen Freistich (20) vertieft ausgebildet ist.

7. Scheibenbremsbelag (2), für eine Kraftfahrzeugteilbelagscheibenbremse (30), mit einer Rückenplatte (1) aus Stahlblechwerkstoff, nach einem oder mehreren der Ansprüche 1 - 6, die in Ihrem Zentrum Reibwerkstoff (3) trägt, und der Reibwerkstoff (3) über eine Reibfläche mit idealem Reibkraftangriff im Zentrum Z unter tangential gerichteter Kraftwirkungslinie verfügt, und dazu orthogonal an einen Reibring anpressbar ist, zwecks Kooperation mit zwei axial gerichteten sowie parallel zueinander arrangierten Bolzen zur Abstützung- und/oder zur Führung vom Scheibenbremsbelag (2) in der Kraftfahrzeugscheibenbremse (30), **dadurch gekennzeichnet, dass** die Rückenplatte (1) asymmetrisch ausgetrennt ist, und nur an einer Stirnseite (6) über einen Haltevorsprung (10) mit einem Durchgangsloch (11) zur Aufnahme von einem Haltebolzen (21) verfügt, so dass der Haltevorsprung (10) mit Abstand a radial unterhalb von Zentrum Z bzw. Wirkungslinie an der Rückenplatte (1) angeordnet ist, wobei der zugeordnete Haltebolzen (21) entsprechend radial unterhalb vom Zentrum Z angreifen kann, und wobei an der gegenüberliegenden Stirnseite (7), radial oberhalb von Wirkungslinie bzw. Zentrum Z, ein Führungsvorsprung (12) mit Maulöffnung (13) und Aufnahmetasche (14) vorgesehen ist, wobei ein Führungsbolzen (22) durch die Maulöffnung (13) in die Aufnahmetasche (14) formschlüssig einzugreifen vermag, so dass die Abstützung von Führungsbolzen (22) und Haltebolzen (21) an der Rückenplatte (1) in Tangentialrichtung T mit weitestgehend maximiertem Abstand b zueinander definiert vorgesehen ist.

8. Scheibenbremsbelag (2) nach Anspruch 7, **dadurch gekennzeichnet, dass** die Aufnahmetasche (14) und die Gabelzinken (15, 16) parallel zur Tangentialrichtung T zwei Führungsflächen (17, 18) definieren, welche an die Maulöffnung (13) angrenzen, und wobei jeweils eine der Führungsflächen (17, 18) zwecks Scheibenbremsbelagauflage in der Radialrichtung R am Führungsbolzen (22) dient.

9. Scheibenbremsbelag (2) nach Anspruch 7 oder 8, **dadurch gekennzeichnet, dass** die Führungsflächen (17,18), gegenüber der Maulöffnung (13), durch einen Boden (19) verbunden sind, und wobei der Boden (19) durch einen Freistich (20) vertieft ausgebildet ist, der in der Tangentialrichtung T ein vorgegebenes Spiel zwischen Führungsbolzen (22) und Aufnahmetasche (14) definiert.

10. Scheibenbremsbelag (2) nach einem oder mehreren der vorhergehenden Ansprüche 7 bis 9, **dadurch gekennzeichnet, dass** zwischen den Führungsflächen (17, 18) und dem Boden (19) wenigstens zwei oder mehr gekrümmte Übergangsabschnitte vorgesehen sind.

11. Scheibenbremsbelag (2) nach einem oder mehreren der Ansprüche 7 bis 10, **dadurch gekennzeichnet, dass** Haltebolzen (21) und Führungsbolzen (22) mit kreisförmigem Querschnitt sowie zylindrisch ausgebildet sind.

12. Scheibenbremsbelag (2) nach einem oder mehreren der Ansprüche 7 bis 11, **gekennzeichnet durch** die stirnseitenweise Funktionstrennung derart, dass die Aufnahmetasche (14) mit den Führungsflächen (17,18) im Wesentlichen ausschließlich zur Übertragung von radial gerichteten Scheibenbremsbelagführungskräften vorgesehen ist, wohingegen der Haltevorsprung (10) mit dem Durchgangsloch (11) im Wesentlichen ausschließlich zur Übertragung von tangential gerichteten Bremsumfangskräften vorgesehen ist.

13. Scheibenbremsbelag (2) nach Anspruch 7, **dadurch gekennzeichnet, dass** das Durchgangsloch (11) als radial gestreckt ausgerichtetes Langloch ausgebildet ist, dessen Durchmesser in Radialrichtung R mit Hilfe von Freisparungen größer ausgebildet ist, als dessen Durchmesser in der Tangentialrichtung T.

14. Scheibenbremsbelag (2) nach einem oder mehreren der vorhergehenden Ansprüche 7-13, **gekennzeichnet durch** einlaufseitige pull-Abstützung am Haltebolzen (21) infolge Bremsung bei Vorwärtsfahrt und auslaufseitige push-Abstützung am Haltebolzen (21) infolge Bremsung bei Rückwärtsfahrt.

15. Scheibenbremsbelag (2) nach einem oder mehreren der vorhergehenden Ansprüche 7-14, **gekennzeichnet durch** ein zur Raddrehachse einschwenkendes Eindrehmoment auf den Scheibenbremsbelag (2) bei Vorwärtsfahrt und wobei eine obere Führungsfläche (17,18) auf dem Führungsbolzen (22) aufsitzt.

16. Scheibenbremsbelag (2) nach einem oder mehreren der vorhergehenden Ansprüche 7-15, **gekennzeichnet durch** ein von der Raddrehachse ausschwenkendes Ausdrehmoment auf den Scheibenbremsbelag (2) bei Rückwärtsfahrt und wobei eine untere Führungsfläche von der Aufnahmetasche (14) auf dem Führungsbolzen (22) aufsitzt.

17. Kraftfahrzeugteilbelagscheibenbremse (30) für ein Kraftfahrzeug, umfassend ein Gehäuse (31) mit zwei gegenüberliegenden Gehäuseschenkeln (32,33) die einander gegenüberliegende Kolben (34, 35) in gegenüberliegenden Bohrungen (36,37) aufnehmen, und die Gehäuseschenkel (32,33) durch eine Gehäusebrücke (38) biegesteif mit definiertem Abstand zueinander verbunden sind, und die Kolben (34,35) parallel zueinander entlang einer Achse A verschiebbar geführt aufgenommen sind, sowie mit paarweise vorgesehenen Scheibenbremsbelägen (2) nach Anspruch 7, die in dem Gehäuse (31) durch parallel zueinander arrangierte Bolzenpaare axial verschiebbar geführt sowie drehfest abgestützt sind, und wobei jeder Scheibenbremsbelag (2) durch wenigstens einen Kolben (34, 35) direkt betätigt ist, **dadurch gekennzeichnet, dass** jeder Gehäuseschenkel (32,33) einen Haltebolzen (21) zur Aufnahme von Umfangskraft und einen Führungsbolzen (22) zur Führung vom Scheibenbremsbelag (2) aufweist, und wobei die Bolzen (21,22) an zugeordneten Durchgangslöchern (11) und Aufnahmetaschen (14) der Rückenplatte (1) des Scheibenbremsbelags (2) so angreifen, dass eine einlaufseitige pull-Abstützung vom Scheibenbremsbelag (2) am Haltebolzen (21) infolge Bremsung bei Vorwärtsfahrt und eine auslaufseitige push-Abstützung vom Scheibenbremsbelag (2) am Haltebolzen (21) infolge Bremsung bei Rückwärtsfahrt vorliegt.

18. Kraftfahrzeugteilbelagscheibenbremse (30) nach Anspruch 17, **dadurch gekennzeichnet, dass** jeder Haltebolzen (21) in Bezug auf ein Zentrum vom Scheibenbremsbelag radial innen platziert vorgesehen ist, und dass jeder Führungsbolzen in Bezug auf das Zentrum vom Scheibenbremsbelag radial aussen platziert vorgesehen ist, so dass ein zur Raddrehachse einschwenkendes Eindrehmoment auf dem Scheibenbremsbelag bei Vorwärtsfahrt einwirkt, und eine obere Führungsfläche von der Aufnahmetasche auf dem Führungsbolzen aufsitzt, und indem ein von der Raddrehachse ausschwenkendes Ausdrehmoment auf dem Scheibenbremsbelag bei Rückwärtsfahrt einwirkt, und wobei eine untere Führungsfläche von der Aufnahmetasche auf dem Führungsbolzen aufsitzt.

19. Kraftfahrzeugteilbelagscheibenbremse (30) nach Anspruch 17 oder 18, **dadurch gekennzeichnet, dass** das Gehäuse (31) über eine asymmetrisch angepasst gestaltete Scheibenbremsbelagaufnahme für eine asymmetrisch geformte Rückenplatte (1) verfügt, deren Kontur an die asymmetrisch ausgetrennte Rückenplatte (1) vom Scheibenbremsbelag (2) angepasst ist, so dass eine gegenseitig formschlüssige und lagerichtige Formcodierung vorliegt, die automatisch eine einzige lagerichtige Montagepaarung zwischen Scheibenbremsbelag (2) und Gehäuse (31) definiert (poka yoke).

20. Kraftfahrzeugteilbelagscheibenbremse (30) nach einem oder mehreren der Ansprüche 17 - 19, **dadurch gekennzeichnet, dass** an jedem Gehäuseschenkel (32,33) zwei identisch stark dimensionierte Bolzen vorgesehen sind, und dass am zugeordneten Scheibenbremsbelag (2) ein Durchgangsloch (11) und eine Maulöffnung (13) mit Aufnahmetasche (14) mit jeweils identischer Weite vorgesehen sind.

21. Kraftfahrzeugteilbelagscheibenbremse (30) nach einem oder mehreren der Ansprüche 17-20, **dadurch gekennzeichnet, dass** jeder Gehäuseschenkel (32,33) über zwei unterschiedlich dick dimensionierte Bolzen verfügt, und dass am zugeordneten Scheibenbremsbelag (2) jeweils ein Durchgangsloch (11) und eine Maulöffnung (13) mit Aufnahmetasche (14) mit unterschiedlich, an die Bolzenquerschnitte angepasste, Weite vorgesehen ist (poka yoke).

## Claims

1. Backing plate (1) for a disk brake lining (2) of a motor-vehicle partially lined disk brake (30), made from sheet-steel material as a carrier for friction material (3), which can be fixed permanently, centrally and directly or indirectly on a front side (4) of the backing plate (1), and wherein the backing plate (1) has protrusions oriented tangentially outward on diametrically opposite end faces (6, 7), wherein one of the end faces (6) has, radially on the inside, a retaining protrusion (10) having a through-hole (11), **characterized in that** the opposite end face (7) of the backing plate (1) is provided radially on the outside with an open guide protrusion (12), which has a jaw opening (13) having a receiving pocket (14).

2. Backing plate (1) according to Claim 1, **characterized in that** the guide protrusion (12) has at least two fork prongs (16) arranged largely parallel to one another.

3. Backing plate (1) according to Claim 2, **characterized in that** the fork prongs (16) are connected to one another by a bridge (23).

4. Backing plate (1) according to Claim 1, 2 or 3, **characterized in that** the through-hole (11) and the jaw opening (13) having the receiving pocket (14) are arranged on the end faces (6, 7) of the backing plate (1) so as to be offset diagonally opposite one another.

5. Backing plate (1) according to Claim 1, 2, 3 or 4, **characterized in that** the through-hole (11) and the jaw opening (13) have different or identical receiving cross sections.

6. Backing plate (1) according to one or more of the preceding Claims 1-5, **characterized in that**, parallel to the tangential direction T, the receiving pocket (14) defines two guide surfaces (17, 18) arranged a) parallel to one another or b) obliquely in a funnel shape, which adjoin the jaw opening (13), and **in that** the guide surfaces (17, 18) are connected, opposite the jaw opening (13), by a base (19), and wherein the base (19) is designed in such a way that it is deepened by a relief groove (20).

7. Disk brake lining (2) for a motor-vehicle partially lined disk brake (30), having a backing plate (1) made from sheet-steel material, according to one or more of Claims 1-6, which carries friction material (3) in the centre thereof, and the friction material (3) has a friction surface with ideal frictional force action in the centre Z with a tangentially oriented line of action of the force and, orthogonally with respect thereto, can be pressed against a friction ring for the purpose of cooperating with two axially oriented pins arranged parallel to one another for supporting and/or guiding the disk brake lining (2) in the motor-vehicle disk brake (30), **characterized in that** the backing plate (1) is cut out asymmetrically and has a retaining protrusion (10) having a through-hole (11) for receiving a retaining pin (21) only at one end face (6), with the result that the retaining protrusion (10) is arranged on the backing plate (1) at a distance a radially below the centre Z or line of action, wherein the associated retaining pin (21) can engage in corresponding fashion radially below the centre Z, and wherein a guide protrusion (12) having a jaw opening (13) and a receiving pocket (14) is provided on the opposite end face (7), radially above the line of action or centre Z, wherein a guide pin (22) can engage positively in the receiving pocket (14) through the jaw opening (13), with the result that the support of the guide pin (22) and the retaining pin (21) on the backing plate (1) is provided in such a way as to be defined with a distance b in the tangential direction T that is maximized as far as possible.

8. Disk brake lining (2) according to Claim 7, **characterized in that** the receiving pocket (14) and the fork prongs (15, 16) define two guide surfaces (17, 18) parallel to the tangential direction T, which guide surfaces adjoin the jaw opening (13), and wherein in each case one of the guide surfaces (17, 18) serves the purpose of supporting the disk brake lining in the radial direction R on the guide pin (22).

9. Disk brake lining (2) according to Claim 7 or 8, **characterized in that** the guide surfaces (17, 18) are connected opposite the jaw opening (13) by a base (19), and wherein the base (19) is designed in such a way as to be deepened by a relief groove (20), which defines a predetermined play between the guide pin (22) and the receiving pocket (14) in the tangential direction T.

10. Disk brake lining (2) according to one or more of preceding Claims 7 to 9, **characterized in that** at least two or more curved transitional sections are provided between the guide surfaces (17, 18) and the base (19).

11. Disk brake lining (2) according to one or more of Claims 7 to 10, **characterized in that** the retaining pin (21) and the guide pin (22) are designed with a circular cross section and so as to be cylindrical.

12. Disk brake lining (2) according to one or more of Claims 7 to 11, **characterized by** functional separation as between end faces in such a way that the receiving pocket (14) having the guide surfaces (17, 18) is provided substantially exclusively for the transmission of radially oriented disk-brake lining guiding forces, whereas the retaining protrusion (10) having the through-hole (11) is provided substantially exclusively for the transmission of tangentially oriented circumferential braking forces.

13. Disk brake lining (2) according to Claim 7, **characterized in that** the through-hole (11) is designed as a slotted hole oriented in a radially extended manner, the diameter of which in the radial direction R is made larger with the aid of relief grooves than the diameter thereof in the tangential direction T.

14. Disk brake lining (2) according to one or more of the preceding Claims 7-13, **characterized by** entry-side pull support on the retaining pin (21) due to braking during forward travel and exit-side push support on the retaining pin (21) due to braking during reverse travel.

15. Disk brake lining (2) according to one or more of the preceding Claims 7-14, **characterized by** an inward-turning torque on the disk brake lining (2), pivoting inward toward the axis of rotation of the wheel, during forward travel, and wherein an upper guide surface (17, 18) rests on the guide pin (22).

16. Disk brake lining (2) according to one or more of the preceding Claims 7-15, **characterized by** an outward-turning torque on the disk brake lining (2), pivoting outward away from the axis of rotation of the wheel, during reverse travel, and wherein a lower guide surface of the receiving pocket (14) rests on the guide pin (22).

17. Motor-vehicle partially lined disk brake (30) for a motor vehicle, comprising a housing (31) having two opposite housing legs (32, 33), which accommodate mutually opposite pistons (34, 35) in opposite bores (36, 37), and the housing legs (32, 33) are connected in a flexurally stiff manner at a defined distance from one another by a housing bridge (38), and the pistons (34, 35) are accommodated in such a way as to be guided in a manner that allows them to move parallel to one another along an axis A, and having disk brake linings (2) according to Claim 7 provided in pairs, which are supported in the housing (31) in such a way as to be guided, in a manner that allows axial movement but prevents relative rotation, by pin pairs arranged parallel to one another, and wherein each disk brake lining (2) is actuated directly by at least one piston (34, 35), **characterized in that** each housing leg (32, 33) has a retaining pin (21) for absorbing circumferential force and a guide pin (22) for guiding the disk brake lining (2), and wherein the pins (21, 22) engage in such a way on associated through-holes (11) and receiving pockets (14) of the backing plate (1) of the disk brake lining (2) that there is entry-side pull support for the disk brake lining (2) on the retaining pin (21) due to braking during forward travel and exit-side push support for the disk brake lining (2) on the retaining pin (21) due to braking during reverse travel.

18. Motor-vehicle partially lined disk brake (30) according to Claim 17, **characterized in that** each retaining pin (21) is provided in such a way as to be positioned radially on the inside in relation to a centre of the disk brake lining, and **in that** each guide pin is provided in such a way as to be positioned radially on the outside in relation to the centre of the disk brake lining, with the result that an inward-turning torque acts on the disk brake lining, pivoting inward toward the axis of rotation of the wheel, during forward travel, and an upper guide surface of the receiving pocket rests on the guide pin, and an outward-turning torque acting on the disk brake lining, pivoting outward away from the axis of rotation of the wheel, during reverse travel, and wherein a lower guide surface of the receiving pocket rests on the guide pin.

19. Motor-vehicle partially lined disk brake (30) according to Claim 17 or 18, **characterized in that** the housing (31) has a disk brake lining receptacle of asymmetrically adapted configuration for an asymmetrically shaped backing plate (1), the contour of which is adapted to the asymmetrically cut-out backing plate (1) of the disk brake lining (2), with the result that there is mutually positive and positionally correct shape coding, which automatically defines a single positionally correct assembly pairing of the disk brake lining (2) and the housing (31) (poka yoke) .

20. Motor-vehicle partially lined disk brake (30) according to one or more of Claims 17-19, **characterized in that** two pins of identical size dimensions are provided on each housing leg (32, 33), and **in that** a through-hole (11) and a jaw opening (13) having a receiving pocket (14) of identical width in each case are provided on the associated disk brake lining (2).

21. Motor-vehicle partially lined disk brake (30) according to one or more of Claims 17-20, **characterized in that** each housing leg (32, 33) has two pins of different thickness dimensions, and **in that** a through-hole (11) and a jaw opening (13) having a receiving pocket (14) of different widths adapted to the pin cross sections are provided in each case on the associated disk brake lining (2) (poka yoke).

## Revendications

1. Plaque arrière (1), pour une garniture de frein à disque (2) d'un frein à disque à garniture partielle de véhicule automobile (30), en matériau à base de tôle d'acier en tant qu'élément porteur pour le matériau de friction (3) qui peut être fixé à demeure au centre ainsi que directement ou indirectement sur un côté avant (4) de la plaque arrière (1), et la plaque arrière (1) disposant de parties saillantes orientées tangentiellement vers l'extérieur sur des côtés frontaux (6, 7) diamétralement opposés l'un à l'autre, l'un des côtés frontaux (6) disposant dans le sens radial à l'intérieur d'une partie saillante de maintien (10) comprenant un trou traversant (11),
**caractérisée en ce que**
le côté frontal (7) opposé de la plaque arrière (1) est pourvu, dans le sens radial à l'extérieur, d'une partie saillante de guidage (12) ouverte qui dispose d'une ouverture en bec (13) dotée d'une poche d'accueil (14).

2. Plaque arrière (1) selon la revendication 1,
**caractérisée en ce que** la partie saillante de guidage (12) dispose d'au moins deux dents de fourche (16) disposée en grande partie parallèlement l'une à l'autre.

3. Plaque arrière (1) selon la revendication 2,
**caractérisée en ce que** les dents de fourche (16) sont reliées l'une à l'autre mutuellement par un pont (23).

4. Plaque arrière (1) selon la revendication 1, 2 ou 3, **caractérisée en ce que** le trou traversant (11) et l'ouverture en bec (13) dotée de la poche d'accueil (14) sont disposés de manière diagonalement opposée l'un à l'autre et décalée niveau des côtés frontaux (6, 7) de la plaque arrière (1).

5. Plaque arrière (1) selon la revendication 1, 2, 3 ou 4, **caractérisée en ce que** le trou traversant (11) et l'ouverture en bec (13) disposent de sections transversales d'accueil différentes ou identiques.

6. Plaque arrière (1) selon une ou plusieurs des revendications précédentes 1 à 5, **caractérisée en ce que** la poche d'accueil (14) définit parallèlement à la direction tangentielle T deux surfaces de guidage (17, 18) a) parallèles l'une à l'autre ou b) biseautées en forme d'entonnoir, lesquelles sont adjacentes à l'ouverture en bec (13), et **en ce que** les surfaces de guidage (17, 18), à l'opposé de l'ouverture en bec (13), sont reliées par un fond (19), et le fond (19) est réalisé de manière approfondie par une rainure de dégagement (20).

7. Garniture de frein à disque (2) pour un frein à disque à garniture partielle de véhicule automobile (30), comprenant une plaque arrière (1) en matériau à base de tôle d'acier selon une ou plusieurs des revendications 1 à 6, qui porte en son centre un matériau de friction (3), et le matériau de friction (3) dispose d'une surface de friction ayant une application de force de friction idéale au centre Z sous une ligne d'action de force orientée tangentiellement et, à cet effet, peut être compressé orthogonalement contre un anneau de friction en vue de la coopération avec deux goujons orientés axialement et disposés parallèlement l'un à l'autre servant au soutien et/ou au guidage de la garniture de frein à disque (2) dans le frein à disque de véhicule automobile (30), **caractérisée en ce que** la plaque arrière (1) est séparée de manière asymétrique et ne dispose qu'au niveau d'un côté frontal (6) d'une partie saillante de maintien (10) comprenant un trou traversant (11) destiné à accueillir un goujon de maintien (21), de sorte que la partie saillante de maintien (10) est disposée avec un écart a dans le sens radial au-dessous du centre Z ou de la ligne d'action sur la plaque arrière (1), le goujon de maintien (21) associé pouvant venir en prise en conséquence dans le sens radial au-dessous du centre Z, et une partie saillante de guidage (12) comprenant une ouverture en bec (13) et une poche d'accueil (14) se trouvant au niveau du côté frontal (7) opposé, dans le sens radial au-dessus de la ligne d'action ou du centre Z, un goujon de guidage (22) étant capable de venir en prise par complémentarité de formes à travers l'ouverture en bec (13) dans la poche d'accueil (14), de sorte que l'appui du goujon de maintien (21) et du goujon de guidage (22) contre la plaque arrière (1) dans la direction tangentielle T est conçu de manière définie avec un écart b maximisé autant que possible entre eux.

8. Garniture de frein à disque (2) selon la revendication 7, **caractérisée en ce que** la poche d'accueil (14) et les dents de fourche (15, 16) définissent parallèlement à la direction tangentielle T deux surfaces de guidage (17, 18), lesquelles sont adjacentes à l'ouverture en bec (13), et l'une des surfaces de guidage (17, 18) servant respectivement à l'application de la garniture de frein à disque dans la direction radiale R contre le goujon de guidage (22).

9. Garniture de frein à disque (2) selon la revendication 7 ou 8, **caractérisée en ce que** les surfaces de guidage (17, 18), à l'opposé de l'ouverture en bec (13), sont reliées par un fond (19), et le fond (19) étant réalisé de manière approfondie par une rainure de dégagement (20) qui, dans la direction tangentielle T, définit un jeu prédéfini entre le goujon de guidage (22) et la poche d'accueil (14).

10. Garniture de frein à disque (2) selon une ou plusieurs des revendications précédentes 7 à 9, **caractérisée en ce qu'**au moins deux portions de transition curvilignes ou plus se trouvent entre les surfaces de guidage (17, 18) et le fond (19).

11. Garniture de frein à disque (2) selon une ou plusieurs des revendications 7 à 10, **caractérisée en ce que** le goujon de maintien (21) et le goujon de guidage (22) sont réalisés avec une section transversale de forme circulaire ainsi que de manière cylindrique.

12. Garniture de frein à disque (2) selon une ou plusieurs des revendications 7 à 11, **caractérisée par** la séparation fonctionnelle par côté frontal de telle sorte que la poche d'accueil (14) dotée des surfaces de guidage (17, 18) est conçue sensiblement exclusivement pour la transmission de forces de guidage de garniture de frein à disque orientées radialement, alors que la partie saillante de maintien (10) dotée du trou traversant (11) est conçue sensiblement exclusivement pour la transmission de forces périphériques de frein orientées tangentiellement.

13. Garniture de frein à disque (2) selon la revendication 7, **caractérisée en ce que** le trou traversant (11) est réalisé sous la forme d'un trou oblong orienté de manière étendue dans le sens radial dont le diamètre dans la direction radiale R est, à l'aide d'évidements, configuré plus grand que son diamètre dans la direction tangentielle T.

14. Garniture de frein à disque (2) selon une ou plusieurs des revendications précédentes 7 à 13, **caractérisée par** un soutien en traction du côté entrée au niveau du goujon de maintien (21) suite à un freinage en marche avant et un soutien en poussée du côté de la sortie au niveau du goujon de maintien (21) suite à un freinage en marche arrière.

15. Garniture de frein à disque (2) selon une ou plusieurs des revendications précédentes 7 à 14, **caractérisée par** un couple de vissage causant un pivotement vers l'intérieur par rapport à l'axe de rotation de roue sur la garniture de frein à disque (2) lors d'une marche avant et une surface de guidage (17, 18) supérieure reposant sur le goujon de guidage (22).

16. Garniture de frein à disque (2) selon une ou plusieurs des revendications précédentes 7 à 15, **caractérisée par** un couple de dévissage causant un pivotement vers l'extérieur par rapport à l'axe de rotation de roue sur la garniture de frein à disque (2) lors d'une marche arrière et une surface de guidage inférieure de la poche d'accueil (14) reposant sur le goujon de guidage (22).

17. Frein à disque à garniture partielle de véhicule automobile (30) pour un véhicule automobile, comprenant un boîtier (31) pourvu de deux branches de boîtier (32, 33) en opposition qui accueillent des pistons (34, 35) en opposition mutuelle dans des alésages (36, 37) en opposition, et les branches de boîtier (32, 33) sont reliées en rigidité de flexion par un pont de boîtier (38) avec un écart défini l'une de l'autre, et les pistons (34, 35) sont accueillis parallèlement l'un à l'autre guidés de manière coulissante le long d'un axe A, et comprenant des garnitures de frein à disque (2) selon la revendication 7 disposées par paires, lesquelles sont guidées de manière coulissante dans le sens axial dans le boîtier (31) par des paires de goujons disposées parallèlement l'une à l'autre et sont soutenues en rotation solidaire, et chaque garniture de frein à disque (2) étant actionnée directement par au moins un piston (34, 35), **caractérisé en ce que** chaque branche de boîtier (32, 33) possède un goujon de maintien (21) destiné à absorber une force périphérique et un goujon de guidage (22) destiné à guider la garniture de frein à disque (2), et les goujons (21, 22) venant en prise au niveau de trous traversants (11) et de poches d'accueil (14) associés de la plaque arrière (1) de la garniture de frein à disque (2) de telle sorte qu'il existe un soutien en traction du côté entrée de la garniture de frein à disque (2) au niveau du goujon de maintien (21) suite à un freinage en marche avant et un soutien en poussée du côté de la sortie de la garniture de frein à disque (2) au niveau du goujon de maintien (21) suite à un freinage en marche arrière.

18. Frein à disque à garniture partielle de véhicule automobile (30) selon la revendication 17, **caractérisé en ce que** chaque goujon de maintien (21), en référence à un centre de la garniture de frein à disque, est prévu de manière à être placé radialement à l'intérieur, et **en ce que** chaque goujon de guidage, en référence au centre de la garniture de frein à disque, est prévu de manière à être placé radialement à l'extérieur, de sorte qu'un couple de vissage causant un pivotement vers l'intérieur par rapport à l'axe de rotation de roue agit sur la garniture de frein à disque lors d'une marche avant, et une surface de guidage supérieure de la poche d'accueil repose sur le goujon de guidage, tandis qu'un couple de dévissage causant un pivotement vers l'extérieur par rapport à l'axe de rotation de roue agit sur la garniture de frein à disque lors d'une marche arrière et une surface de guidage inférieure de la poche d'accueil reposant sur le goujon de guidage.

19. Frein à disque à garniture partielle de véhicule automobile (30) selon la revendication 17 ou 18, **caractérisé en ce que** le boîtier (31) dispose d'un logement de garniture de frein à disque de configuration adaptée asymétrique pour une plaque arrière (1) façonnée asymétriquement, dont le contour est adapté à la plaque arrière (1) séparée de manière asymétrique de la garniture de frein à disque (2), de sorte qu'un codage de forme mutuel par complémentarité de formes et en position correcte est réalisé, lequel définit automatiquement un appariement de montage en position correcte unique entre la garniture de frein à disque (2) et le boîtier (31) (détrompage).

20. Frein à disque à garniture partielle de véhicule automobile (30) selon une ou plusieurs des revendications 17 à 19, **caractérisé en ce que** deux goujons de forte taille identiques se trouvent au niveau de chaque branche de boîtier (32, 33), et **en ce qu'**un trou traversant (11) et une ouverture en bec (13) dotée d'une poche d'accueil (14) ayant respectivement une largeur identique se trouvent au niveau de la garniture de frein à disque (2) associée.

21. Frein à disque à garniture partielle de véhicule automobile (30) selon une ou plusieurs des revendications 17 à 20, **caractérisé en ce que** chaque branche de boîtier (32, 33) dispose de deux goujons d'épaisseurs différentes, et **en ce qu'**un trou traversant (11) et une ouverture en bec (13) dotée d'une poche d'accueil (14) ayant des largeurs différentes, adaptées aux sections transversales de goujon, se trouvent respectivement au niveau de la garniture de frein à disque (2) associée (détrompage).
